# EUROPÄISCHE PATENTANMELDUNG

(11) **EP 1 650 370 A2**
(43) Veröffentlichungstag der Anmeldung: **26.04.2006**
(21) Anmeldenummer: 05450175.4
(22) Anmeldetag: 20.10.2005
(51) Int. Cl.: E04B 1/94

(54) **Dämm- und Brandschutzplatte sowie Verfahren zu deren Einbau**

(30) Priorität: 20.10.2004 AT 17632004
(71) Anmelder: Bucher, Peter, 6391 Fieberbrunn (AT)
(72) Erfinder: Bucher, Peter, 6391 Fieberbrunn (AT)
(74) Vertreter: Wildhack, Helmut

(57) **Zusammenfassung**

Die Erfindung betrifft eine Dämm- und Brandschutzplatte mit Mehrschichtaufbau für Schutz und Verkleidung von Bauten und für deren Trag- und Trennstrukturen, wobei zumindest eine rigide, hitzeresistente Grundschicht aus einem anorganischen Material und zumindest eine Wärme- und Schalldämmschicht aus einem organischen Material aneinander gebunden sind, wobei vorgesehen ist, dass die Rechteck- oder Quadratform aufweisende Dämm- und Brandschutzplatte (100) als Grundschicht eine tragfeste Brandausbreitungs-Hemmschicht (1) auf Basis auf Basis von, nicht armiertem oder armierten Magnesiumoxid, Magnesiumoxichlorid und/oder Silikatmaterial und eine mit derselben mittels Adhäsionsschicht (3) auf Basis eines gegebenenfalls brandresistenten Klebers (3) flächig verbundene Wärme- und Schalldämm- sowie Hitzehemm-Schicht (2) auf Basis von Kork Korkmaterial, Holz-Pflanzen- oder Papierfasermaterials aufweist.

## Beschreibung

Die Erfindung betrifft eine neue brandresistente Bauplatte, insbesondere eine Dämm- und Brandschutzplatte mit Mehrschicht-Aufbau, insbesondere für den Schutz und die Verkleidung von Bauten, Gebäudeteilen und deren Trag- und Trennstrukturen sowie für die Erstellung von Gebäude-Trennstrukturen, wie z.B. Zwischenwände, Schachtverkleidungen od. dgl., wobei zumindest eine rigide, hitzeresistente Grundschicht auf Basis eines anorganischen, insbesondere mineralischen, Materials und zumindest eine Wärme- und Schalldämmschicht auf Basis eines organischen Materials flächig aneinander gebunden sind, sowie weiters ein spezielles Verfahren zu deren Einbau in eine Baustruktur.

In den letzten Jahren ist insbesondere in Folge der auf dem Gebiet des Brandschutzes ständig steigende Anforderungen stellenden gesetzlichen Bestimmungen die Nachfrage nach brandhemmenden und brandschützenden Produkten für Dach, Fassaden, Trennwänden, Tragstrukturen und anderen Teilen von Bauten und Gebäuden stark gestiegen, und dies insbesondere bei den Verarbeitern, wie bei Zimmereien, Bauunternehmen u.dgl.

Auf dem Gebiet des Brandschutzes von Bauten sind in Österreich nur relativ wenige Produkte, wie z.B. solche auf Basis von Gips im Handel, jedoch genügen dieselben in den wenigsten Fällen den strengen Kriterien eines möglichst hohen und effektiven Brandschutzes.

Die vorliegende Erfindung hat sich die Aufgabe gestellt, ein sozusagen doppelt schutzwirksames, nämlich ein einerseits brandhemm- und brandschutz-wirksames Bauelement, insbesondere eine derartige Bauplatte, zu schaffen, welches bzw. welche andererseits gleichzeitig allen heute gestellten Anforderungen bezüglich Wärme- und Schalldämmung zu genügen imstande ist.

Was den Stand der Technik betrifft, so haben auf dem Gebiet der Wärme- und Schalldämmung im Bauwesen Polyurethan-Dämmstoffe mit ihren an sich sehr hohen Wärmedämmwerten, bevorzugt Einsatz gefunden. Hinsichtlich Brandschutz sind jedoch Dämmplatten aus diesem Material deshalb besonders gefährlich, weil sie im Brandfall giftige Gase entwickeln. Diese Gefährlichkeit geht so weit, dass mit Polyurethan gefertigte Platten heute teilweise nicht mehr zu Brandschutzprüfungen zugelassen werden, dass also deren Untersuchung und Prüfung aufgrund der Giftigkeit der in der von denselben bei Hitzeeinwirkung entwickelten Gase und Schadstoffe, wie z.B. Dioxin, von den Prüf-Instituten verweigert wird.

Bekannt geworden sind z. B. aus der FR 2276277 flamm- bzw. brandsichere Zusammensetzungen für Bauzwecke auf Basis von Zement, Korkgranulat, Kalzit oder Korkmehl, Mineral-Farben, jeweils bestimmter Korngrößenfraktionen und Wasser, sowie Bauelemente bzw. -platten auf Basis derartiger Zusammensetzungen.

Weiters ist in der GB 356191 A ein leichtes und hitzebeständiges Material beschrieben, welches durch die Behandlung eines Magnesiumsilikates, wie Asbest, oder eines Aluminiumsilikates, wie Glimmer, mit Flusssäure erhalten wird und selbstbindend und selbsthärtend ist und welches auch mit Korkpulver bzw. Korkgranulat als wärmeisolierender Zusatz versetzt sein kann.

Schließlich ist noch die DE 19719509 A1 zu erwähnen, welche eine verpresste mehrschichtige Wärmedämm-Verbundplatte zum Gegenstand hat und mit Schichten aus folgenden Materialien gebildet ist: Als ein- oder beidseitiger Schichtträger dient eine handelsübliche Bau- bzw. Bauverbundtafel, weiters ist eine hochtemperaturbeständige Kleberschicht vorgesehen, dann eine Dämmwerkstoff-Schicht auf Basis eines Schichtsilikates, insbesondere Vermiculit, und schließlich eine Schicht aus fein verteilten Metalloxiden und/oder hochdisperser pyrogener Kieselsäure sowie mit eventuellen weiteren Dämmwerkstoffschichten. Für den Schichtträger sind dort - ohne Hervorhebung eines oder mehrerer der Werkstoffe - Styropor, Holz-Styropor(-Holz), Polystyrol, Polyurethan, Holzwolle, Steinwolle, Steinholz, Heraklith, Glasschaum, Holzspanplattenmaterial, Holzpappe, Kork, Gips und Blech genannt.

Das an sich ebenfalls sehr wärmedämm-wirksame Styropor ist im Hinblick auf den Brandschutz bis jetzt von vornherein an praktisch auszuschließen, da dieses Material in der Hitze faktisch zu schmelzen beginnt, abtropft und sich verflüchtigt.

Einen wesentlichen Anstoß für die der vorliegenden Erfindung zugrunde liegende Entwicklung hat die an sich allgemeine Kenntnis aus der Luft- und Raumfahrt gegeben, wo Kork bzw. Korkprodukte zur Beherrschung der hohen Temperaturen beim Eintritt von Raumschiffen in die Erdatmosphäre als Hitzehemm-Dämmmaterial verwendet werden. Orientierende Versuche haben ergeben, dass ein Bauelement, insbesondere eine Bauplatte, welche im Wesentlichen auf der Kombination einer Brandschutzplatte auf Basis eines anorganischen Materials mit einer Schicht bzw. Platte auf Basis von natürlichem Kork problemlos den Anforderungen der Brandschutzklasse F60 und F90 zu entsprechen vermag, wobei der wesentliche Vorteil gegeben ist, dass im Brandfall die Kork-Schicht trotz der hohen Temperaturen keine giftigen Gase entwickelt und - an eine andere nicht brennbare Schicht gebunden - selbst nur unter Glosen und ohne offene Verbrennung in eine Hitze-Isolierschicht aus Kohlenstoff umgewandelt wird, welche dann eine äußerst geringe Hitzeleitfähigkeit aufweist, so dass es zu dem gerade vorher angesprochenen Hitzehemm-Effekt kommt.

Gegenstand der vorliegenden Erfindung ist somit eine wie eingangs genannte Dämm- und Brandschutzplatte mit Sandwich- bzw. Mehrschicht-Aufbau, insbesondere für den Schutz und die Verkleidung von Bauten, Gebäudeteilen und deren Trag- und Trennstrukturen sowie für die Erstellung von Gebäude-Trennstrukturen selbst, wobei zumindest eine rigide, hitzeresistente Grundschicht auf Basis eines anorganischen, insbesondere mineralischen Materials, und zumindest eine Wärme- und Schalldämmschicht auf Basis eines organischen Materials flächig aneinander gebunden sind, welche die im **kennzeichnenden Teil** des **Anspruchs** 1 aufgeführten Merkmale aufweist.

Es sind in dem Anspruch 1 die für den Einsatzzweck günstigsten, für die Bildung der Wärme- und Schalldämm- sowie Hitzehemm-Schicht der neuen Dämm- und Brandschutzplatte einzusetzenden Korke bzw. das derartige Korkmaterial in verschiedenen vorteilhaften Ausbildungsformen genannt, wobei im Falle der Korkgranulat-Spritzmasse die Korkpartikel zusammen mit einem dieselben umhüllenden, vorzugsweise brandresistenten und gegebenenfalls hitze-intumeszierenden, Bindemittel auf die mineralische Brandausbreitungs-Hemmschicht bzw. -platte der neuen Dämm- und Brandschutzplatte aufgebracht ist.

Die folgende Tabelle zeigt nur beispielhaft die Zusammensetzung eines einer handelsüblichen, brandresistenten Bauplatte ("Firex"), wie sie als Bestandteil der erfindungsgemäßen Dämm- und Brandschutzplatte vorgesehen ist, zugrundeliegenden Materials.

| Komponenten | Zusammensetzung: |
|---|---|
| Magnesiumoxid | 30-40% |
| Magnesiumchlorid | 15-20% |
| Ton | 10-15% |
| Glasfaser | 5-10% |
| Sägemehl/Asche | 15-20% |

Feuerbeständigkeit: bis zu 5 Std. (entspricht EI 300)

Die neuen Dämm- und Brandschutzplatten sind von ihrer an den Einsatzzweck angepassten Dimensionierung und der jeweiligen Dimensionierung ihrer sie aufbauenden Schichten abgesehen, praktisch mit ein und demselben Aufbau jedenfalls als begehbare Dachboden-Bodenplatten und Dach-Dämmplatten, als Bauteil- und Fassaden-Platten, als Estrich-Dämmplatten, als Decken-Dämmplatten und nicht zuletzt als brandresistente Zwischenwand-(Leichtbau-)Platten, Schachtwand-Platten u.dgl. einsetzbar. Nicht unerwähnt soll bleiben, dass sie nicht nur für derartige feststehende Trennwände geeignet sind, sondern auch für Verschlüsse von Öffnungen bzw. Durchbrechungen in solchen Trennwänden, also für Verschlussdeckel, Feuerschutz-Türen und deren Türblätter u. dgl. vorgesehen sein können.

Die Korkschicht kann beispielsweise mit einem Korngranulat mit einer Dichte im Bereich von 0,16 bis 0,20 kg/m³ oder mit einem Korksplitt mit einer Dichte im Bereich von 65 bis 70 kg/m³ gebildet sein, oder sie kann als Vollkork-Schicht mit einer Dichte im Bereich von 105 bis 115 kg/m³ vorliegen. Die Wasserdampfdiffusions-Widerstandszahlen µ solcher Korkschichten liegen im Bereich zwischen 1 und 20, und deren Wärmeleitfähigkeit (λ10) im Bereich von 0,03 bis 0,05 W/mK.

Bevorzugte Lieferländer für hochqualitative Korke bzw. Korkgranulate sind Portugal und Spanien.

Dem **Anspruch** 2 ist zu entnehmen, dass an Stelle von Kork und diversen Korkmaterialien auch (Leichtgewicht-) Holz-, Pflanzen-, Pappe- und Papierfaser-Materialien für die Bildung der Wärme- und Schalldämm- sowie Hitzehemm-Schicht eingesetzt werden können.

Bezüglich der im Rahmen der Erfindung als Adhäsionsschicht bevorzugtermaßen einzusetzenden Kleber bzw. Klebemassen für die möglichst vollflächige Verbindung der mineralischen Brandausbreitungs-Hemmschicht mit der Wärme- und Schalldämm- sowie Hitzehemmschicht auf Basis von Kork für den Erhalt einer einbaubereiten Dämm- und Brandschutzplatte gemäß der Erfindung, gibt der **Anspruch** 3 näher Auskunft.

Bevorzugt ist es, wenn die Klebeschicht zwischen der Brandausbreitungs-Hemmschicht bzw. -platte und der Wärme- und Schalldämm-Schicht bzw. -Platte mit einem bei höheren Temperaturen, wie sie im Brandfall auftreten, sich in ihrem Volumen wesentlich, also um ein Vielfaches erhöhenden und sich gleichzeitig rasch und stark aufblähenden und so die Luftzufuhr zum Feuer hin abwürgenden, intumeszierenden Material, beispielsweise mit einer auf polymer gebundener Hydrosilikat-Basis gebildeten Klebemasse gebildet ist.

Ein konkretes Beispiel für eine in den neuen Brandschutzplatten als Adhösieonsschicht mit Vorteil einsetzbare Klebemasse stellt das Handelsprodukt "Cellcoat" dar, welches intumeszierend ist, dessen Basis durch wasserhaltige Kieselerden mit Gehalten an gebundenem Wasser im Bereich von 25 bis 30% und einem Kieselsäure-Modul von 4 - 4,5 gebildet ist. Ab Temperaturen von 150°C aufwärts, beginnt das in der Masse gebundene Wasser zu verdampfen und kühlt hiebei die mit der Masse belegte Fläche, und gleichzeitig bläht sich die Klebemasse auf und bildet eine harte Haut (K-Wert kleiner als 0,05 W/mK), welche bei Temperaturen von über 900°C zu einer glas- bzw. keramikartigen Masse verschmilzt und somit auch dann noch brandausbreitungs-hindernd ist.

Dieser die Ausbreitung eines Brandes extrem behindernde und meist ein Löschen des Brandes infolge Sauerstoffmangels herbeiführende Intumeszenz-Effekt lässt sich im Rahmen der Maßnahmen gemäß **Anspruch** 3, wie gefunden wurde, mit einem Anstrich bzw. mit einer Beschichtung der neuen Dämm- und Brandschutzplatten mit einer Anstrichmasse, welche wie soeben beschriebene Intumeszenz-Eigenschaften aufweist, noch wesentlich steigern.

Insbesondere für den Einsatz zur Bildung von Verkleidungsstrukturen mit Wärme- und Schalldämmwirkung, welche mit strukturgebendem Baumaterial zu hinterfüllen sind, sind im Rahmen der Erfindung Dämm- und Brandschutzplatten mit miteinander formschluss-kooperierenden Form- und Gegen-Formschlusselementen, wie z.B. mit Stufenfalzen oder Nut und Feder, wie sie im **Anspruch** 4 näher beschrieben sind, von Vorteil.

Derartige, über ihre Seitenränder formschlüssig seitlich aneinander liegend bzw. stoßend anordenbare Brandschutz-Bauplatten eignen sich, wie schon oben kurz erwähnt, für die Hinterfütterung von Dachflächen, als begehbare Platten für Dachböden, als Estrich- und Fassadenplatten als eigenständige Bauplatten für Leicht-Trennwände, Schachtwände u. dgl. und eben, wie gerade zuvor erörtert, insbesondere für die Verkleidung von durch Hintergießen mit einer Bindemittelmasse zu erstellende Baustrukturen, wobei diesem Anspruch 4 eine im Rahmen der Erfindung bevorzugte Ausführungsform der soeben genannten Formschluss- und Gegen-Formschlusselemente zu entnehmen ist.

Was den Einsatz der neuen Dämm- und Brandschutzplatten für Dächer von Bauten betrifft, soll hier etwas weiter ausgeholt werden: Es entspricht der an sich bis jetzt üblichen Art der Aufbringung von Dämmverkleidungen für Dächer, jedoch im eigentlichen Sinn nicht der tatsächlichen Arbeitslogik, wenn die Verlegung darin besteht, dass zuerst eine Schalung angeordnet wird, und dass die Dämmstoffelemente bzw. -platten darauf verlegt werden. An sich könnte ein einfacherer Weg darin bestehen, auf den Sparren die bereits fertigen Dämm- und Brandschutzplatten mit endgültiger Untersicht zu verlegen und anstatt, die Schalung zur Erzielung der Regendichtheit durch Aufbringung einer Unterspannbahn zu erstellen, die neue Dämmelemente gleich von vornherein mit der Dachbahn bzw. Oberlagenschicht zu versehen. Dies führt dazu, dass praktisch nur mehr ein einziger Arbeitsgang bei der Anbringung einer gleichzeitig wärme- und schalldämm- und brandschutzgerechten Verkleidung am Dach notwendig ist, anstatt, wie bisher vier bis fünf verschiedene Arbeitsgänge. Auf diese Weise kann eine 20- bis 30-prozentige Kostenersparnis als Folge des Wegfalles von Arbeitsschritten erzielt werden.

Die konkrete Umsetzung dieser Überlegungen hat zur Erstellung einer für die Dämmung von Dächern vorgesehenen, vorteilhaften Ausführungsform der Erfindung geführt, nämlich zu den besonders einfach zu verlegenden Dämm- und Brandschutzplatten, wie sie im **Anspruch** 5 geoffenbart sind.

Hiebei ist eine Ausbildungsform mit jeweils an zwei Seitenrändern über die Kontur der neuen Dämm- und Brandschutzplatte hinausragenden Randabschnitten der Schalungs-Folien, wie sie dem Anspruch 5 ebenfalls zu entnehmen ist, besonders bevorzugt.

Wenn die neue Dämm- und Brandschutzplatte für die Bildung einer Dämm- und Brandschutzverkleidung vorgesehen ist, welche mit dem strukturgebenden Baustoff der mit der genannten Verkleidung zu versehenden Struktur eines Baues integral verbunden ist, was insbesondere bei Gebäude-Decken von Vorteil ist, ist im Rahmen der vorliegenden Erfindung eine derartige Bauplatte in der Ausbildungsform gemäß **Anspruch** 6 bevorzugt, und dies insbesondere in der dort angeführten vorzugsweisen Ausführungsform.

Zur konkreten Vorgangsweise bei der Herstellung einer Gebäudedecke mit einer Wärme- und Schalldämm- sowie Brandschutzverkleidung mit den soeben beschriebenen Platten ist folgendes näher auszuführen: Es werden beispielsweise zuerst Kunststoffanker od. dgl. in die die Wärme- und Schalldämm- sowie -Hitzehemm-Schicht bildende Korkplatte geschlagen, gepresst od. dgl. Dann wird mittels brandresistentem und vorzugsweise intumeszierendem Kleber die mineralische Brandausbreitungs-Hemmplatte auf die Korkplatte kaschiert. Die auf diese Weise erhaltenen Dämm- und Brandschutzplatten werden mit den nach oben aufstehenden, die Korkschicht durchdringenden Kunststoffankern vor dem Betonieren seitlich aneinander liegend entweder in die Schalung für das Gießen der Decke gelegt oder aber bilden selbsttragend eine Schalung. Günstig ist hier insbesondere ein wie schon vorher erwähnter Stufenfalz in den Seitenrändern der neuen Dämm- und Brandschutzplatte bzw. eine Nut-und-Feder-Ausbildung derselben.

Danach wird auf die nach oben weisende Korkschicht bzw. -platte der neuen Bauplatte direkt die Eisenbewehrung für die statische Stabilität der künftigen Betondecke eingelegt, wonach das Einbringen des fließfähigen Betons erfolgt, der dort abbindet und erhärtet.

Mittels der aufstehenden Dorne der Kunststoffanker kommt es gleich im Zuge der Fertigung der Decke zu einer fixen Verbindung mit den erfindungsgemäßen Dämm- und Brandschutzplatten, sodass die Decke nach dem Ausschalen oder, wenn ohne Schalung gearbeitet wurde, gleich eine bereits fertige, mit der mineralischen Brandausbreitungs-Hemmschicht gebildete Untersicht aufweist.

Auf die soeben beschriebene Weise kann ein nachträgliches Verputzen und Gittern entfallen bzw. es können überhaupt irgendwelche nachträgliche Arbeiten an der Deckenunterseite unterbleiben.

Den **Ansprüchen** 7 und 8 sind jeweils für verschiedene Fälle besonders vorteilhafte und günstige Ausführungsvarianten der neuen Dämm- und Brandschutzplatte zu entnehmen, die in jeder der besonderen Ausbildungsformen gemäß den schon oben genannten Ansprüchen ausgestaltet sein kann, und bei welcher entweder die Wärme- und Schalldämmschicht nicht unbedingt aus einem Korkmaterial oder aus Kork allein gebildet sein muss und/oder aber die Brandausbreitungs-Hemmschicht nicht unbedingt aus einem Material auf Basis von Magnesiumoxid/Magnesiumoxichlorid und/oder einem Silikat bestehen muss, was die Variationsfähigkeit beim Bauen infolge der dann offen stehenden Möglichkeiten der Anpassung an die jeweiligen regionalen oder lokalen Anforderungen innerhalb eines Baues oder überhaupt an Bauten und Gebäude in einer Region wesentlich erhöht.

Der **Anspruch** 9 betrifft im wesentlichen mobile, Trennfunktion aufweisende Elemente von Gebäuden, nämlich insbesondere Brandschutz-Tore bzw. -Türen mit im wesentlichen analogen, ähnlichem bzw. gleichem Grund-Aufbau, wie die erfindungsgemäßen Dämm- und Brandschutzplatten.

Schließlich hat der **Anspruch** 10 das oben schon näher erläuterte Verfahren zum simultan mit dem Erstellen eines Bauteils erfolgenden Verlegen der neuen Dämm- und Brandschutzplatten zum Gegenstand.

Anhand der Zeichnung wird die Erfindung näher erläutert.

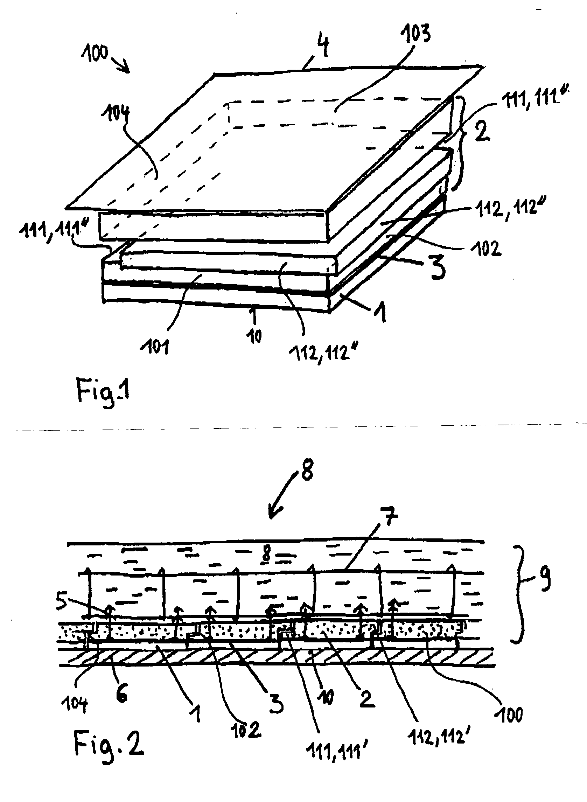

Es zeigen die Fig. 1 in Schrägansicht ein Beispiel für eine Dämm- und Brandschutzplatte gemäß der Erfindung, wie sie für brandresistente Dämm-Verkleidungen von Bauten bzw. Gebäudestrukturen und insbesondere für Decken vorgesehen ist, und die Fig. 2 schematisch den Vorgang bei der Verlegung von derartigen Platten, bei welcher die Bindung derselben direkt an die gerade zu erstellende Gebäudestruktur, im Speziellen an eine Decke, erfolgt.

Die in der Fig. 1 gezeigte Dämm- und Brandschutzplatte 100 ist mit einer rigiden Brandausbreitungs-Hemmschicht bzw. -platte 1 aus einer erhärteten Mineralmaterialmasse, bevorzugt auf Basis von MgO/MgCl₂ und einer Wärme- und Schalldämm- bzw. Hitzehemmschicht bzw. -platte 2, bevorzugt auf Basis eines Korkmaterials oder eines Holz-, Pflanzen- oder Papierfasermaterials, gebildet. Die beiden soeben genannten Schichten bzw. Platten 1 und 2 sind mittels einer Adhäsions- bzw. Klebeschicht 3 mittels eines hitzefesten Klebers bzw. einer hitzebeständigen Klebemasse, welche vorzugsweise Intumenszenz-Eigenschaften besitzt, materialschlüssig miteinander verbunden.

Bei den in der Fig. 1 gezeigten Dämm- und Brandschutzplatten 100 verlaufen entlang von deren Seitenrändern 101 bis 104 jeweils ein Paar von im rechten Winkel zueinander sich erstreckenden "Federn" 112" und ein Paar von zwei derartigen Nuten 111" als Form- und Gegen-Formschlusselemente 111, 112, welche jeweils mit den entsprechenden Gegen-Form- und Formschlusselementen an den entsprechenden Seitenrändern der benachbart zu verlegenden Platten formschluss-kooperieren.

Die Nuten und Federn 111 ", 112" sind, wie aus der Fig. 1 ersichtlich, vorteilhaft in die Korkschicht bzw. -platte 2 eingearbeitet. Die genannten Flächen der Nuten und Federn 111", 112' können mit der Klebemasse der Adhäsionsschicht 3 bedeckt sein. Im Übrigen können die gesamten Seitenränder 101 bis 104 mit einer vorteilhafter Weise mit dem soeben genannten Klebemassen-Material der Adhäsionsschicht 3 übereinstimmenden, bevorzugterweise intumeszierenden, Anstrichsmasse beschichtet sein. Die zur Brandgefährdung hin gerichtete Sichtseite der neuen Bauplatte 100 ist mit 10 bezeichnet.

Die hier mit einem Kork- bzw. sonstigen Fasermaterial gebildete Wärme- und Schalldämm- sowie Hitzehemm-Schicht 2 ist schließlich nach oben hin mit einer sie vollflächig deckenden Schalungsfolie 4 verbunden, welche die beiden in der Fig. 1 jeweils rückwärtigen, im rechten Winkel aneinanderstoßenden Seitenränder 103, 104 der Platte 100 bzw. deren Kontur ein Stück weit überragen, was den Vorteil hat, dass beim Nebeneinander-Verlegen der neuen Brandschutzplatten 100 eine gut überlappende Deckung der Oberlagenschichten 4 gewährleistet ist.

Die Fig. 2 zeigt - bei im Übrigen gleichbleibenden Bezugszeichenbedeutungen - den Vorgang einer im Rahmen der Erfindung besonders bevorzugten bauerstellungsintegralen Verlegung der erfindungsgemäßen Dämm- und Brandschutzplatten 100: Auf eine Decken-Schalung 6 werden hier - jeweils gegenüberliegende Seitenränder 102, 104 mit Stufenfalzen 111', 112' als Formschlusselemente 111, 112 aufweisende - Dämm- und Brandschutzplatten 100 gemäß der Erfindung mit den beiden mittels Klebemasse 3 miteinander flächig verklebten Schichten bzw. Platten 1 und 2 aufgelegt, wobei die Brandausbreitungs-Hemmschicht 1 zur Schalung 6 hin weist und die Wärme- und Schalldämm- so wie Hitzehemmschicht 2 nach oben hin weist, ebenso wie die in diese Schicht 2 eingeschlagenen Kunststoffanker 5. Auf die auf diese Weise auf der Schalung 6 verlegten Brandschutzplatten 100 wird dann die für die ausreichende Statik der künftigen Decke 9 vorgesehene Bewehrung 7 aufgelegt, wonach die strukturgebende Bindemittelmasse 8, also üblicherweise Beton, aufgebracht wird, welcher dort abbindet und erhärtet. Nach Entfernen der Schalung 6 wird eine ohne jeden weiteren Arbeitsgang fertig mit den neuen Brandschutzplatten 100 verkleidete Decke 9 mit unversehrter Unterseite 10 bzw. Untersicht erhalten.

Es soll hier angemerkt werden, dass im Falle des Einsatzes entsprechend mechanisch stabiler Dämm- und Brandschutzplatten 100 die oben beschriebene Schalung 6 weggelassen werden kann und die aneinander anschließend in Position gehaltenen Platten 100 gleich selbst die Funktion der Schalung übernehmen können.

## Patentansprüche

1. Dämm- und Brandschutzplatte mit Mehrschicht-Aufbau für den Schutz und die Verkleidung von Bauten, Gebäudeteilen und deren Trag- und Trennstrukturen sowie für die Erstellung von Gebäude-Trennstrukturen, wobei zumindest eine rigide, hitzeresistente Grundschicht auf Basis eines anorganischen, insbesondere mineralischen Materials, und zumindest eine Wärme- und Schalldämmschicht auf Basis eines organischen Materials flächig aneinander gebunden sind, **dadurch gekennzeichnet, dass** die Rechteck- oder Quadratform aufweisende, Dämm- und Brandschutzplatte (100) als Grundschicht eine, tragfeste, Brandausbreitungs-Hemmschicht bzw. -platte (1) auf Basis des anorganischen bzw. mineralischen Materials auf Basis von, nicht armiertem oder aber mineral- bzw. glasfaserverstärktem, Magnesiumoxid und/oder Magnesiumoxichlorid (bzw. Sorelzement) und/oder auf Basis eines Silikatmaterials und eine mit derselben mittels einer Adhäsionsschicht (3) auf Basis eines üblichen oder brandresistenten Klebers (3) flächig verbundene Wärme- und Schalldämm- sowie Hitzehemm-Schicht bzw. -Platte (2) auf Basis von Kork bzw. eines Korkmaterials aus der Gruppe nativer Kork, natürliche und/oder expandierte Korkpartikel aufweisendes Korkgranulat oder -splitt oder Korkgranulat-, -splitt- oder -pulver-Spritzmasse.

2. Dämm- und Brandschutzplatte nach Anspruch 1,
**dadurch gekennzeichnet, dass** die Wärme- und Schalldämm- sowie Hitzehemm-Schicht bzw. -Platte (2) auf Basis von, gegebenenfalls brandresistent ausgerüstetem, imprägniertem oder beschichtetem und/oder verdichtetem, Holz, Holzfaser, Pflanzenfaser-, Pappe- und Holzgranulat oder Papierfasern, vorzugsweise von Holz-, Pappe- oder Papierfaser-Dämmstoff.

3. Dämm- und Brandschutzplatte nach Anspruch 1 oder 2,
**dadurch gekennzeichnet,**
- **dass** die Brandausbreitungs-Hemmschicht bzw. -platte (1) mittels eines Klebers bzw. einer Klebemasse (3) auf Basis, eines anorganischen Bindemittels, wie Kalk- und/oder Zement oder auf Basis von Polyurethan, jedoch besonders bevorzugt mit einer Bindemittelmasse mit Intumeszenz-Eigenschaften, wie z.B. auf Basis von Kieselsäure und Natriumhydrosilikat ("Cellcoat"), mit der Wärme- und Schalldämm- sowie Hitzehemmschicht bzw. -platte (2) vollflächig verbunden ist, und/oder
- **dass** die Platte (100) insgesamt oder zumindest deren Schall- und Wärmedämm- sowie Hitzehemm-Schicht (2) mit einer brandresistenten Anstrichmasse mit Intumeszenz-Eigenschaften, wie insbesondere auf Basis von Kieselsäure und Natriumhydrosilikat ("Cellcoat"), versehen ist, und/oder
- die Seitenränder (101-104) derselben mit einer Klebe- und/oder Anstrichmasse mit Intumestenz-Eigenschaften, wie insbesondere auf Basis von Kieselsäure und Natriumhydrosilikat ("Cellcoat"), versehen ist

4. Dämm- und Brandschutzplatte nach einem der Ansprüche 1 bis 3,
**dadurch gekennzeichnet, dass** die, vorzugsweise alle, Seitenränder (101-104) derselben mit denselben entlang verlaufenden Formschlusselementen (111) und Gegen-Formschlusselementen (112), vorzugsweise Stufenfalzen (111', 112') oder Nut und Feder (111", 112"), versehen sind, welche mit jeweils entsprechenden Gegen-Formschlusselementen (112) und Formschlusselementen (111) von benachbart anzuordnenden bzw. zu montierenden Dämm- und Brandschutzplatten (100) formschlusskooperierbar sind, wobei es bevorzugt ist, wenn die Stufen der Stufenfalze (111', 112') bzw. die Nut und Feder (111", 112") als Form- und Gegen-Formschlusselemente (111, 112) in der Wärme- und Schalldämm- sowie Hitzehemm-Schicht bzw. -Platte (2) ausgebildet sind.

5. Dämm- und Brandschutzplatte nach einem der Ansprüche 1 bis 4,
**dadurch gekennzeichnet, dass** sie - für den Einsatz als Dämmung für Dächer bzw. Dachflächen von Bauten - als, vorzugsweise an den Sparren einer Dachkonstruktion zu montierende, Aufsparren-Dämmplatte (100) mit (unter-)sichtseitiger Brandausbreitungs-Hemmschicht bzw. -platte (1), sparrenseitig angeordneter Wärme- und Schalldämm- sowie Hitzehemm-Schicht bzw. -Platte (2) und zusätzlich mit einer außenseitig an dieselbe flächig gebundenen, insbesondere dampfdiffusionsfähigen bzw. - offenen Oberlagenschicht (4), vorzugsweise ein, gegebenenfalls selbstklebendes bzw. selbstklebefähiges Vlies bzw. eine derartige Kunststoff- bzw. Polymer- oder Elastomer-Folie, eine derartige Bitumen-, Kunststoff- bzw. Plastomer-Bahn, eine derartige Plastomer-Bitumen-Bahn oder eine derartige Bahn aus einem Textil- bzw. Geotextilmaterial, ausgebildet ist, wobei vorgesehen ist, dass für eine gegenseitige Überlappung der Oberlagenschichten (4) beim Verlegen der Dämm- und Brandschutzplatten (100) - die jeweilige Oberlagenschicht (4) bzw. das bzw. die dieselbe bildende Vlies, Folien oder Bahn, wenn die genannten Platten (100) Rechteck- oder Quadratform aufweisen, jeweils über zwei im rechten Winkel aneinander stoßende Seitenränder (103, 104) der Platten (100) bzw. über die dortige Kontur derselben seitlich hinausragend ausgebildet ist.

6. Dämm- und Brandschutzplatte nach einem der Ansprüche 1 bis 5,
**dadurch gekennzeichnet, dass** sie - für eine unmittelbare flächige Bindung an einen mit einer zuerst fließfähigen und dann erhärtenden Bindemittel- insbesondere Betonmasse (8) erstellten bzw. zu erstellenden Bauteil, vorzugsweise für den Einsatz als Deckenplatte (100) - mit einer Mehrzahl von deren Schall- und Wärmedämm- sowie Hitzehemm-Schicht bzw. -Platte (2) einbau-seitig bzw. nach oben hin überragenden, für eine unmittelbare Einbindung in die Bindemittelmasse (8) vorgesehenen Verankerungsstiften bzw. -dornen (5) od. dgl. ausgestattet ist, wobei die Verankerungsstifte bzw. -dorne (5) bzw. Kunststoffanker, in der Wärme- und Schalldämmsowie Hitzehemm-Schicht bzw. -Platte (2) derselben verankert bzw. in dieselbe eingeschlagen sind und somit die mit der soeben genannten Schicht bzw. Platte (2) flächig materialschluss-verbundene Brandausbreitungs-Hemmschicht bzw. -platte (1) eine unversehrte Sichtseite (10) aufweist.

7. Ausführungsvariante der Dämm- und Brandschutzplatte gemäß einem der Ansprüche 1 bis 11,
**dadurch gekennzeichnet, dass** entweder deren Brandausbreitungs-Hemmschicht bzw. -platte (1) mit einem von den in den vorangegangenen Ansprüchen genannten mineralbasierten Materialien verschiedenen Material, beispielsweise auf Basis von Gips oder Plaster, und/oder deren Wärme- und Schalldämm - sowie Hitzehemm-Schicht (2) mit einer Kork/Polymerschaum-Mischmasse oder mit einer Schaumglasmasse, mit einer Polymer-Schaummasse, insbesondere auf Basis von Polystyrol, extrudiertem Polystyrol (EPS), geschäumtem Phenolharz oder Polyurethan, und/oder mit einer Pflanzen(Kokos)-, Holzfaser-Glas- bzw. Mineralfaser-Dämmschicht, -matte bzw. -platte gebildet ist.

8. Dämm- bzw. Brandschutzplatte in der Ausführungsvariante gemäß Anspruch 7,
**dadurch gekennzeichnet, dass** die mineralbasierte Brandausbreitungs-Hemmschicht (1) und die Wärme- und Schalldämm- sowie Hitzehemm-Schicht (2) mittels Adhäsionsschicht (3) aus einer brandresistenten, intumeszierenden Klebemassen miteinander verbunden sind und/oder dass die Seitenränder (101-104) derselben und/oder dass die Wärme- und Schalldämm- sowie Hitzehemm-Schicht (2) oder die gesamte Dämm- und Brandschutzplatte (100) mit einer in der Hitze intumeszierenden; gegebenenfalls mit einer der Klebemasse der Adhäsionsschicht (3) ähnlichen oder identen, Überzugs- bzw. Anstrichmasse versehen ist.

9. Dämm- bzw. Brandschutzplatte nach einem der Ansprüche 1 bis 18,
**dadurch gekennzeichnet, dass** sie sie als Türblatt für eine brandresistente Türe od. dgl. mit zumindest einer zur Brandgefährdungsseite hin gerichteten Brandausbreitungs-Hemmschicht bzw. -platte (1) und einer mittels Adhäsionsschicht (3) auf Basis einer, vorzugsweise intumeszierenden, brandresistenten Klebemasse vollflächig an dieselbe gebundenen Wärme- und Schalldämm- sowie Hitzehemm-Schicht (2) gebildet ist, wobei gegebenenfalls vorgesehen ist, dass an diese Schicht (2), ebenfalls vollflächig, mittels, vorzugsweise intumeszierender, brandresistenter Klebemasse eine wie zuerst genannte, weitere Brandausbreitungs-Hemmschicht bzw. -platte gebunden ist, wobei es bevorzugt ist, dass die Brandausbreitungs-Hemmschicht(en) bzw. -platte(n) des Türblattes selbst aus bzw. mit Metall, insbesondere Aluminium oder Stahl, gebildet ist (sind) oder aber mit einer Metallschicht bzw. -platte kaschiert ist (sind).

10. Verfahren zum Anordnen bzw. Einbau einer Dämm- und Brandschutzplatte nach einem der Ansprüche 6 bis 8 an bzw. in einen mit einer zuerst fließfähigen und dann erhärtenden Bindemittel-, insbesondere Betonmasse (8) zu erstellenden bzw. erstellten Bauteil, insbesondere an bzw. in eine derartige Gebäudedecke,
**dadurch gekennzeichnet, dass** die genannte Platte (100) mit ihrer Brandausbreitungs-Hemmschicht bzw. -platte (1) entweder flächig an die Schalung (6) für den genannten Bauteil anliegend oder ohne Schalung selbsttragend und mit ihrer Wärme- und Dämm- sowie Hitzehemm-Schicht bzw. -Platte (2) und den Verankerungselementen (5) bzw. deren Stifte bzw. Dornen nach oben bzw. innen zum zu fertigenden Bauteil, insbesondere Decke (9), hin gerichtet positioniert wird, dass auf die Platten (100) die Bewehrung (7) aufgelegt wird, wonach das Einbringen der strukturgebenden, zuerst fließfähigen und dann abbindenden und erhärtenden, die Stifte bzw. Dorne der Verankerungselemente (5) umschließenden Bindemittelmasse (8) erfolgt.
